# EUROPÄISCHE PATENTSCHRIFT

(11) **EP 1 930 614 B1**
(45) Veröffentlichungstag und Bekanntmachung des Hinweises auf die Patenterteilung: **26.12.2012**
(21) Anmeldenummer: 07118312.3
(22) Anmeldetag: 11.10.2007
(51) Int. Cl.: F16D 48/06, G05G 1/30, G05G 5/06, F16D 27/00, F16D 23/12, F16D 28/00

(54) **Vorrichtung zur Betätigung einer Kupplung in einem Kraftfahrzeug**
Device for actuation of a clutch in a vehicle
Dispositif pour l'actionnement d'un embrayage dans un véhicule

(30) Priorität: 06.12.2006 DE 102006057435
(43) Veröffentlichungstag der Anmeldung: 11.06.2008
(73) Patentinhaber: ROBERT BOSCH GMBH, 70442 Stuttgart (DE)
(72) Erfinder: Sarrazin, Roland, 70195 Stuttgart-Botnang (DE); Hoetzer, Dieter, Farmington Hills, 48331 (US); Hellmann, Manfred, 71706 Hardthof (DE); Kroehnert, Andre, 71672 Marbach (DE)

(56) Entgegenhaltungen:
- EP-A1- 1 609 658
- EP-A2- 0 224 454
- EP-A2- 0 828 085
- FR-A1- 2 712 540
- US-A- 4 793 207
- US-A- 4 796 739
- US-A- 5 117 958

## Beschreibung

### Stand der Technik

Die Erfindung betrifft eine Vorrichtung zur Betätigung einer Kupplung in einem Kraftfahrzeug, mit einem Kupplungspedal, das zwischen einer Ruhestellung und einer betätigten Stellung bewegbar ist, in der es die Kupplung geöffnet hält, einem Stellantrieb, der auf ein Signal eines Treibers die Kupplung (10) öffnet, und einer Arretiereinrichtung, die die Kupplung in der geöffneten Stellung hält und die durch einen Schließbefehl deaktivierbar ist, wobei der Treiber (16) mit einem Steuersystem für den Motor des Fahrzeugs verbunden und dazu ausgebildet ist, das Signal zum Öffnen der Kupplung an den Stellantrieb auszugeben, wenn ein Getriebegang des Fahrzeugs eingelegt ist und die Motordrehzahl einen bestimmten Schwellenwert unterschreitet.

Aus EP 0 828 085 A2 ist eine Vorrichtung dieser Art bekannt, die bei Fahrzeugen mit Handschaltgetriebe nachgerüstet werden kann, um bei einem Gangwechsel das Ein- und Auskuppeln zu automatisieren.

Bei Fahrzeugen mit Handschaltgetriebe muß der Fahrer das Kupplungspedal betätigen, um die Kupplung zu öffnen und so den Motor vom Getriebe zu trennen. Für ein Fahrzeug mit einem solchen Handschaltgetriebe beschreibt DE 102 57 247 A1 einen Geschwindigkeitsregler, der in die Motorsteuerung eingreift, um die Geschwindigkeit des Fahrzeugs auf eine vom Fahrer gewählte Wunschgeschwindigkeit zu regeln. Wenn der Fahrer, beispielsweise bei einem Gangwechsel, die Kupplung betätigt, wird das Ausgangsdrehmoment des Motors automatisch begrenzt, damit in einer Übergangsphase bis zum Einsetzen der Leerlaufdrehzahlregelung des Motors eine übermäßige Zunahme der Motordrehzahl vermieden wird.

Aus DE 10 2004 031833 A1 ist für Fahrzeuge mit Handschaltgetriebe ein adaptiver Geschwindigkeitsregler (ACC; Adaptive Cruise Control) bekannt, der es ermöglicht, die Geschwindigkeit des Fahrzeugs automatisch an die Geschwindigkeit eines vorausfahrenden Fahrzeugs anzupassen, das mit Hilfe eines Radarsystems geortet wird. Dieser Regler weist auch eine sogenannte Stop-and-Go-Funktion auf, die es ermöglicht, das Fahrzeug beispielsweise beim Auffahren auf ein Stauende automatisch in den Stand zu bremsen, wenn das Vorderfahrzeug anhält. Wenn dabei die Geschwindigkeit des Fahzeugs und damit die Motordrehzahl unter einen bestimmten Schwellenwert absinkt, erhält der Fahrer einen Hinweis, daß er die Kupplung betätigen soll, damit ein Abwürgen des Motors verhindert wird.

DE 10 2004 031 030 A1 beschreibt für Fahrzeuge mit Handschaltgetriebe ein ACC-System, das einen integrierten Anfahrregler aufweist, der bei einem Anfahrvorgang das Antriebsmoment des Motors in Abhängigkeit von der Stellung des Kupplungspedals regelt, so daß der Fahrer den Anfahrvorgang allein über das Kupplungspedal steuern kann.

Schließlich sind auch Fahrzeuge mit einem automatisierten Schaltgetriebe bekannt, bei denen der Motor über eine Kupplung mit dem Getriebe verbunden ist und bei dem im Falle eines Wechsels der Getriebestufe die Kupplung automatisch durch einen Kupplungsaktuator betätigt wird. Dieser Kupplungsaktuator steuert auch das Schließen der Kupplung bei einem Anfahrvorgang sowie das Öffnen der Kupplung bei einem Anhaltevorgang, so daß auf ein Kupplungspedal ganz verzichtet werden kann.

### Offenbarung der Erfindung

Aufgabe der Erfindung ist es, eine Vorrichtung zur Betätigung der Kupplung zu schaffen, die es dem Fahrer erlaubt, die Kupplung in herkömmlicher Weise über das Kupplungspedal zu betätigen, dabei jedoch eine komfortablere und situationsgerechtere Bedienung der Kupplung ermöglicht.

Diese Aufgabe wird bei einer Vorrichtung der eingangs genannten Art durch die Merkmale des unabhängigen Anspruchs 1 gelöst.

Somit kann der Fahrer die Kupplung in gewohnter Weise über das Kupplungspedal betätigen. In bestimmten Situationen, beispielsweise wenn das Fahrzeug mit Hilfe eines ACC-Systems mit Stop-and-Go-Funktion automatisch in den Stand gebremst wird, kann jedoch durch ein Signal des Treibers die Kupplung auch automatisch geöffnet werden, so daß der Fahrer nicht tätig zu werden braucht und dementsprechend auch keine Aufforderung zur Betätigung der Kupplung zu erhalten braucht. Die Arretiereinrichtung sorgt dann dafür, daß die Kupplung so lange in der geöffneten Stellung gehalten wird, wie das Fahrzeug bei laufendem Motor steht. Wenn der Fahrer das Fahrzeug wieder in Bewegung setzen will, kann er durch einen entsprechenden Befehl die Arretiereinrichtung deaktivieren, so daß die Kupplung geschlossen wird und/oder der Kupplungszustand vom Fahrer wieder über das Kupplungspedal gesteuert werden kann.

Je nach Ausführungsform kann durch die vorgeschlagene Vorrichtung auch in anderen Situationen ein automatisches Öffnen und Schließen der Kupplung gesteuert werden. Beispielsweise ist es möglich, daß in fahrkritischen Situationen, etwa wenn durch eine geeignete Sensorik oder ein elektronisches Stabilitätsprogramm (ESP) festgestellt wird, daß das Fahrzeug ins Schleudern gerät, die Kupplung automatisch geöffnet wird, damit die angetriebenen Räder frei rollen und wieder Fahrbahnhaftung erlangen können. Wenn sich das Fahrzeug wieder stabilisiert hat, kann die Arretiereinrichtung automatisch deaktiviert werden, so daß die Räder wieder angetrieben werden.

Vorteilhafte Weiterbildungen und Ausgestaltungen der Erfindung ergeben sich aus den Unteransprüchen.

In einer bevorzugten Ausführungsform wirkt der Stellantrieb auf das Kupplungspedal, das seinerseits mit der Kupplung verbunden ist, so daß auf das Signal des Treibers das Kupplungspedal aktiv in die betätigte Stellung gezogen und dadurch die Kupplung geöffnet wird. Der Stellantrieb kann dabei selbsthaltend ausgebildet sein, so daß die Arretiereinrichtung in den Stellantrieb integriert ist. Auf den Schließbefehl hin wird dann die Selbsthaltefunktion des Stellantriebs deaktiviert, so daß die Kupplung aufgrund ihrer Vorspannung in die Ruhestellung zurückkehrt oder aber durch den Stellantrieb kontrolliert in die Ruhestellung überführt wird, sofern nicht der Fahrer durch Betätigung des Kupplungspedals diesen Prozeß übersteuert.

In einer alternativen Ausführungsform ist es jedoch auch denkbar, daß der Stellantrieb und die Arretiereinrichtung so ausgebildet sind, daß sie die Kopplung zwischen dem Kupplungspedal und der Kupplung vorübergehend aufheben, so daß das Kupplungspedal in der Ruhestellung verbleibt, wenn die Kupplung durch den Stellantrieb geöffnet wird. Auf den Schließbefehl hin wird dann spätestens wenn die Kupplung geschlossen ist, die Kopplung zwischen dem Kupplungspedal und der Kupplung wiederhergestellt.

In dem oben beschriebenen Einsatzfall, in dem der Stellantrieb beim automatischen Bremsen des Fahrzeugs in den Stand aktiviert wird, ist es zweckmäßig, wenn der Schließbefehl darin besteht, daß der Fahrer einen Druck auf das Kupplungspedal ausübt. Beispielsweise kann das Kupplungspedal durch den Stellantrieb gegen einen Druckpunkt in der betätigten Stellung gezogen werden und dann durch die Arretiereinrichtung an diesem Druckpunkt gehalten werden. Wenn dann der Fahrer wieder anfahren möchte, braucht er nur einen Druck auf das Kupplungspedal auszuüben, um den Druckpunkt zu überwinden, und die Arretierung wird aufgehoben, so daß der Fahrer das Schließen der Kupplung durch Nachlassen des Kupplungspedals steuern kann. Die Arretiereinrichtung kann in diesem Fall auch in einem Mechanismus bestehen, der unabhängig von dem Stellantrieb auf das Kupplungspedal wirkt. In der Ausführungsform, in der der Stellantrieb nur auf die Kupplung aber nicht auf das Kupplungspedal wirkt, kann entsprechend die Arretierung der Kupplung aufgehoben werden, wenn der Fahrer das Kupplungspedal ganz durchdrückt. Die Kopplung zwischen dem Kupplungspedal und der Kupplung wird dann wiederhergestellt, während sich das Kupplungspedal in der betätigten Position befindet, so daß auch in diesem Fall der Fahrer den Anfahrvorgang über das Kupplungspedal steuern kann.

Besonders zweckmäßig ist die Erfindung in Kombination mit einem Anfahrregler, wie er in DE 10 2004 031 030 A1 beschrieben wird. Wenn dann das Fahrzeug automatisch in den Stand gebremst wurde und die Kupplung durch Einziehen des Kupplungspedals gelöst wurde, wird das Fahrzeug durch fortgesetzte Aktivierung des Bremssystems im Stand gehalten. Wenn der Fahrer wieder anfahren möchte, braucht er lediglich einen Druck auf das Kupplungspedal auszuüben, um den Druckpunkt zu überwinden, wodurch die Arretiereinrichtung für die Kupplung deaktiviert und zugleich die Fahrzeugbremse gelöst wird. Der Anfahrregler steuert dann das Antriebsdrehmoment des Motors in der Weise, daß der Fahrer den Anfahrvorgang allein durch kontrolliertes Zurücknehmen des Kupplungspedals steuern kann, ohne daß er das Gaspedal betätigen muß. Wenn dann die Kupplung ganz geschlossen ist und somit der Motor und das Getriebe wieder kraftschlüssig miteinander verbunden sind, erfolgt die weitere, gegebenenfalls abstandsabhängige Geschwindigkeitsregelung durch das ACC-System.

Es versteht sich, daß sich in diesem Fall der Anfahrregler nur dann aktivieren läßt, wenn auch die Bedingungen für einen automatischen Anfahrvorgang erfüllt sind, das heißt z. B., wenn ein zum Anfahren geeigneter Gang (erster Gang) eingelegt ist und das Radarsystem keine Hindernisse im unmittelbaren Vorfeld des Fahrzeugs feststellt.

In einer alternativen Ausführungsform ist es auch möglich, daß der Anfahrregler über den Treiber auf den Stellantrieb für die Kupplung einwirkt, so daß der Fahrer den Anfahrvorgang nur auszulösen braucht, etwa indem er durch Tastendruck einen aufgrund der Ortungsdaten vom ACC-System ausgegebenen Anfahrhinweis (Vorderfahrzeug setzt sich wieder in Bewegung) bestätigt, oder indem er das Kupplungspedal kurzes antippt bzw. den Druckpunkt des Kupplungspedals überwindet, und dann der weitere Anfahrvorgang automatisch abläuft, wobei die Kupplung und das Motordrehmoment durch den Anfahrregler in koordinierter Weise gesteuert werden.

### Kurze Beschreibung der Zeichnungen

Ausführungsbeispiele der Erfindung sind in den Zeichnungen dargestellt und in der nachfolgenden Beschreibung näher erläutert.

### Es zeigen:

Fig. 1 ein Blockdiagramm einer Vorrichtung gemäß einer ersten Ausführungsform der Erfindung;
Fig. 2 ein Zustandsdiagramm zur Erläuterung der Funktionsweise der Vorrichtung nach Figur 1;
Fig. 3 ein Blockdiagramm einer Vorrichtung gemäß einem abgewandelten Ausführungsbeispiel;
Fig. 4 eine Prinzipskizze einer Arretiereinrichtung für die Kupplung im nichtarretierten Zustand;
Fig. 5 eine Prinzipskizze analog zu Fig. 5 für den arretierten Zustand;
Fig. 6 einen schematischen Schnitt durch die Arretiereinrichtung in dem Zustand gemäß Fig. 4; und
Fig. 7 einen Schnitt durch die Arretiereinrichtung in dem Zustand gemäß Fig. 5.

### Ausführungsformen der Erfindung

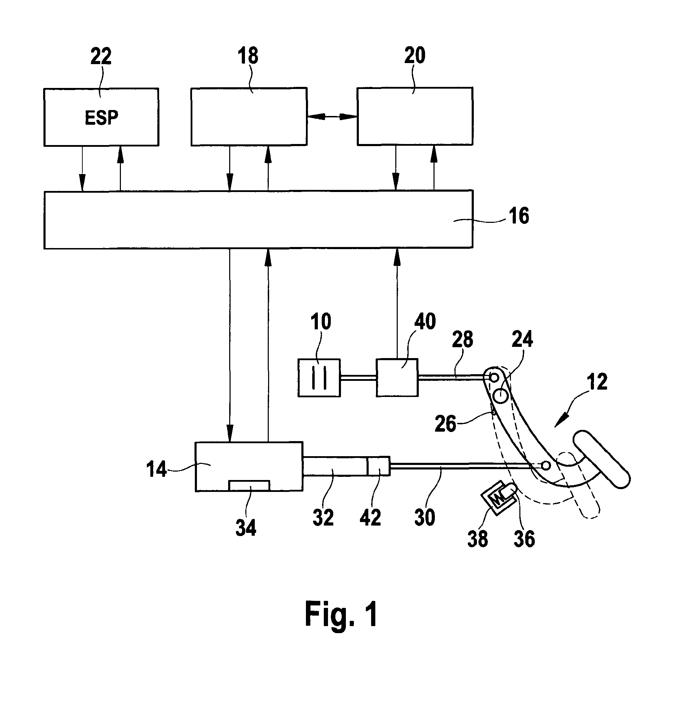

Die in Figur 1 gezeigte Vorrichtung zur Betätigung einer hier nur symbolisch dargestellten Kupplung 10 umfaßt ein Kupplungspedal 12, einen Stellantrieb 14 für das Kupplungspedal, und einen Treiber 16, der den Stellantrieb 14 ansteuert. Der Treiber 16 kommuniziert mit einem ACC-System (Geschwindigkeitsregler) 18, einem elektronischen Steuersystem 20 für den Fahrzeugmotor und einem elektronischen Stabilitätssystem (ESP) 22 zur dynamischen Stabilitätskontrolle des Fahrzeugs.

Das Kupplungspedal 12 ist in bekannter Weise um eine Achse 24 schwenkbar und kann beispielsweise durch eine Schenkelfeder 26 elastisch in eine Ruhestellung vorgespannt sein, die in Figur 1 in durchgezogenen Linien dargestellt ist. Ein Seilzug 28, beispielsweise ein Bowdenzug, verbindet das Kupplungspedal 12 mechanisch mit der Kupplung 10.

Ein weiterer Seilzug 30 (Bowdenzug) verbindet das Kupplungspedal 12 mit einer Stellstange 32 des Stellantriebs 14. Bei diesem Stellantrieb kann es sich um irgendein geeignetes Antriebselement handeln, beispielsweise einen pneumatischen oder hydraulischen Stellantrieb, vorzugsweise jedoch um einen elektromechanischen Stellantrieb. Im gezeigten Beispiel ist der elektromechanische Stellantrieb 14 selbsthaltend, d. h. er weist eine integrierte Arretiereinrichtung 34 auf, die die Stellstange 32 und damit das Kupplungspedal 12 in der jeweils eingestellten Position hält, solange der Stellantrieb 14 aktiv ist.

So kann der Stellantrieb 14 das Kupplungspedal 12 in die in Fig. 1 gestrichelt eingezeichnete betätigte Position ziehen und dann in dieser Position halten. In dieser betätigten Position liegt das Kupplungspedal an einem federbelasteten Druckglied 36 eines Anschlags 38 an.

Zur Erfassung des Pedalwegs des Kupplungspedals 12 ist zusätzlich ein Pedalwegsensor 40 vorgesehen, der im gezeigten Beispiel an dem Zugseil 28 angeordnet ist und die jeweilige Stellung des Kupplungspedals 12 - und damit auch die Stellung der Kupplung 10 - an den Treiber 16 meldet. Mit Hilfe des Stellantriebs 14, des Pedalwegsensors 40 und des Treibers 16 ist somit im Bedarfsfall eine Servosteuerung des Kupplungspedals 12 und der Kupplung 10 möglich. Da jedoch die mechanische Verbindung zwischen dem Kupplungspedal 12 und dem Stellantrieb 14 über den Seilzug 30 erfolgt, kann der Fahrer das Kupplungspedal 12, solange es nicht am Anschlag 38 anliegt, jederzeit stärker durchtreten als es der Stellantrieb 14 vorgibt.

Im gezeigten Beispiel ist zwischen der Stellstange 32 und dem Seilzug 30 ein Zugspannungsdetektor 42 eingefügt, der ein Signal an den Stellantrieb 14 ausgibt, sobald die Zugspannung des Seilzugs 30 einen bestimmten Schwellenwert überschreitet. Dieser Schwellenwert ist so gewählt, daß er überschritten wird, wenn das Kupplungspedal 12 auf das federbelastete Druckglied 36 trifft, dieses jedoch noch nicht vollständig in den Anschlag 38 zurückdrückt. Der Zugspannungsdetektor 42 veranlaßt dann, daß die Stellstange 32 nicht weiter eingezogen, sondern in der erreichten Position gehalten wird.

Auf diese Weise wird das Kupplungspedal 12 in der am Druckglied 36 anliegenden Stellung arretiert. Wenn dann der Fahrer mit dem Fuß auf das Kupplungspedal 12 drückt und so das Druckglied 36 ganz in den Anschlag 38 zurückdrückt, nimmt die Spannung des Seilzugs 30 wieder ab, und das entsprechende Signal des Zugspannungsdetektors 42 bewirkt, daß die Selbsthaltefunktion des Stellantriebs 14 deaktiviert wird, so daß das Kupplungspedal 12 unter der Wirkung der Schenkelfeder 26 in die Ruhestellung zurückkehrt. Dabei hat jedoch der Fahrer die Möglichkeit, die Rückkehrbewegung mit dem Fuß zu verzögern oder das Kupplungspedal erneut durchzutreten. Wahlweise kann die Rückkehrbewegung auch durch den Stellantrieb 14 gesteuert werden, indem die Stellstange 32 mit einer geeigneten Geschwindigkeit ausgefahren wird.

Die Funktion des Zugspannungsdetektors 42, die darin besteht, das Erreichen der betätigten Stellung sowie die Überwindung des durch das Druckglied 36 gebildeten Druckpunktes zu melden, kann wahlweise auch von dem Pedalwegsensor 40 übernommen werden. Umgekehrt kann in einer modifizierten Ausführungsform der Pedalweg auch direkt an der Stellstange 32 gemessen werden, sofern der Stellantrieb so ausgelegt ist, daß er den Seilzug 30 ständig gespannt hält.

Mit der oben beschriebenen Vorrichtung ist es möglich, das Kupplungspedal 12, auf ein Signal des Treibers 16, unabhängig von der Betätigung des Kupplungspedals durch den Fahrer in die betätigte Stellung zu ziehen und somit die Kupplung 10 zu öffnen und das Pedal dann in der betätigten Stellung zu arretieren, bis die Betätigung durch den Fahrer aufgehoben wird, indem er das Pedal über den Druckpunkt hinaus durchtritt. Das Treibersignal zum Öffnen der Kupplung kann beispielsweise dann ausgelöst werden, wenn das Steuersystem 20 meldet, daß die Motordrehzahl unter einen Wert abgenommen hat, bei dem unter den gegebenen Lastbedingungen kein stabiler Lauf des Motors mehr gewährleistet ist. Auf diese Weise läßt sich ein Abwürgen des Motors verhindern.

Wenn, wie hier angenommen werden soll, das ACC-System 18 eine sogenannte Stop-and-Go-Funktion aufweist, also in der Lage ist, das Fahrzeug automatisch in den Stand zu bremsen, wird die oben beschriebene Situation, in der die Kupplung automatisch geöffnet wird, regelmäßig dann eintreten, wenn das Fahrzeug bei eingelegtem Gang nahezu zum Stillstand gekommen ist. Somit kann der Anhaltevorgang vollautomatisch durchgeführt werden, und der Fahrer braucht erst dann wieder einzugreifen, wenn das Fahrzeug erneut anfahren soll.

Im gezeigten Beispiel weist das ACC-System 18 außerdem einen integrierten Anfahrregler auf, wie er z. B. in DE 10†2004†031 030 A1 beschrieben ist. Wenn, beispielsweise in einem Verkehrsstau, das Fahrzeug mit eingelegtem Gang und laufendem Motor steht und der zum ACC-System 18 gehörende Radarsensor meldet, daß sich das Vorderfahrzeug wieder in Bewegung setzt und auch sonst keine Hindernisse im unmittelbaren Vorfeld des Fahrzeugs zu orten sind, so wird eine automatische Anfahrfunktion freigegeben. Gegebenenfalls kann über eine Fahrerschnittstelle auch ein Anfahrhinweis an den Fahrer ausgegeben werden. Wenn der Fahrer dann aus eigener Initiative oder als Reaktion auf den Anfahrhinweis das Kupplungspedal 12 über den Druckpunkt hinaus betätigt, wird dies vom Pedalwegsensor 40 und/oder dem Zugspannungsdetektor 42 festgestellt und über den Treiber 16 an das ACC-System 18 und die Motorsteuerung 20 gemeldet, mit der Folge, daß nicht nur die Arretierung des Kupplungspedals 12 aufgehoben wird, sondern über das ACC-System auch die Fahrzeugbremse gelöst wird. Gleichzeitig erhält die Motorsteuerung 20 den Befehl, das Antriebsdrehmoment des Motors in Abhängigkeit vom Kupplungszustand zu regeln oder zu steuern. Wenn dann der Fahrer allmählich das Kupplungspedal 12 kommen läßt, verfolgt das Steuersystem 20 mit Hilfe des Pedalwegsensors 40 und des Treibers 16 die Bewegung des Kupplungspedals und sorgt dafür, daß mit fortschreitendem Einrücken der Kupplung jederzeit ein ausreichendes Antriebsdrehmoment für den Anfahrvorgang zur Verfügung steht, bis schließlich ein vollständiger Kraftschluß zwischen dem Getriebe und dem Motor hergestellt ist. Der Fahrer kann somit den Anfahrvorgang allein mit Hilfe des Kupplungspedals 12 steuern, ohne daß er gleichzeitig das Gaspedal betätigen muß.

Während der Fahrt kann der Treiber 16 das Signal zum Öffnen der Kupplung 10 beispielsweise auch dann ausgeben, wenn das elektronische Stabilitätssystem 22 meldet, daß ein fahrkritischer Zustand vorliegt, z. B. daß das Fahrzeug ins Schleudern geraten ist.

Durch die automatische Aufhebung des Kraftschlusses zwischen dem Motor und dem Getriebe wird dann erreicht, daß die Antriebsräder des Fahrzeugs frei rollen können, wodurch die Wiederherstellung eines Kraftschlusses zwischen den Reifen dieser Räder und der Fahrbahn erleichtert wird. In diesem Fall ist es allerdings zweckmäßig, wenn der Fahrer nicht erst das Kupplungspedal über den Druckpunkt hinaus durchtreten muß, um die Arretierung der Kopplung wieder aufzuheben. Statt dessen wird in diesem Fall der Befehl zum Aufheben der Arretierung durch den Treiber 16 ausgegeben, sobald das elektronische Stabilitätssystem 22 meldet, daß wieder ein stabiler dynamischer Zustand des Fahrzeugs erreicht ist. Um ein allzu abruptes Eingreifen der Kupplung 10 zu vermeiden, kann dabei die Rückkehrbewegung des Gaspedals 12 in die Ruhestellung durch den Stellantrieb 14 gesteuert werden.

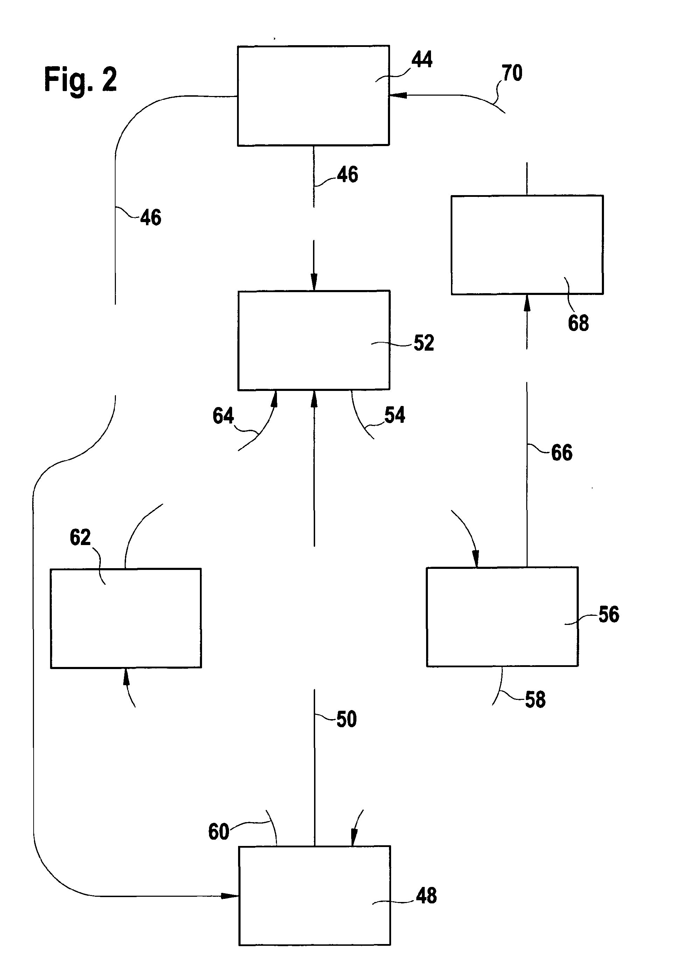

Fig. 2 zeigt ein Zustandsdiagramm, anhand dessen das Zusammenwirken der erfindungsgemäßen Vorrichtung mit dem ACC-System 18 näher erläutert werden soll.

In einem Ruhezustand 44 des Fahrzeugs ist die Zündung ausgeschaltet, und das Kupplungspedal 12 befindet sich in der Ruhestellung.

Wie durch den Pfeil 46 symbolisiert wird, schaltet der Fahrer nun die Zündung ein und betätigt das Kupplungspedal, um den ersten Gang einzulegen, oder er hat zunächst den ersten Gang eingelegt und hält das Kupplungspedal betätigt, während er die Zündung einschaltet. Das System geht dann in den Zustand 48 über und wartet darauf, daß der Fahrer das Kupplungspedal zurücknimmt. Da in diesem Zustand der Stellantrieb 14 nicht aktiviert ist und die Stellstange 32 ausgefahren ist, wird das Kupplungspedal nicht in der betätigten Stellung arretiert, sondern der Seilzug 30 ist gelockert.

Es soll nun zunächst angenommen werden, daß der Fahrer das Kupplungspedal zurücknimmt und dabei die Bedingungen für eine automatische Anfahrregelung nicht erfüllt sind (Pfeil 50), beispielsweise weil das ACC-System 18 noch nicht aktiviert ist. Der Fahrer steuert also in herkömmlicher Weise mit Gaspedal und Kupplung den Anfahrvorgang, und wenn das Kupplungspedal die Ruhestellung erreicht hat, befindet sich das System im Zustand 52. Normalerweise wird der Fahrer im weiteren Verlauf der Fahrt mehrfach das Kupplungspedal betätigen, um hoch- oder herunterzuschalten. Das System wird folglich mehrfach zwischen den Zuständen 48 und 52 wechseln, dabei jedoch stets entsprechend dem Pfeil 50 in den Zustand 52 zurückkehren, weil die Bedingungen für eine Anfahrregelung jedenfalls nicht erfüllt sind, wenn das Fahrzeug bereits fährt.

Wenn im Zustand 52 ein Gang eingelegt ist und die Motordrehzahl unter einen von der Motorsteuerung bestimmten Schwellenwert abnimmt, beispielsweise weil der Fahrer das Fahrzeug ausrollen läßt oder weil inzwischen das ACC-System 18 aktiviert wurde und dessen Stop-and-Go-Funktion ein automatisches Bremsen in Stand veranlaßt, so geht das System gemäß Pfeil 54 in den Zustand 56 über. Dabei gibt der Treiber 16 an den Stellantrieb 14 das Signal zum Einziehen des Kupplungspedals aus. Wenn das Kupplungspedal die am Druckglied 36 anliegende Stellung erreicht, wird es in dieser Stellung arretiert.

Wenn der Fahrer nun wieder anfahren möchte, betätigt er das Kupplungspedal 12 über den Druckpunkt hinaus, so daß das Kupplungspedal am Anschlag 38 anschlägt und dabei das Druckglied 36 zurückdrückt. Daraufhin wird die integrierte Arretiereinrichtung 34 deaktiviert, und das System geht gemäß Pfeil 58 wieder in den Zustand 48 über.

Es soll nun angenommen werden, daß die Bedingungen für eine automatische Anfahrregelung erfüllt sind. Wenn der Fahrer das Kupplungspedal kommen läßt, geht das System gemäß Pfeil 60 in den Zustand 62 über, und das ACC-System 18 regelt den Anfahrvorgang entsprechend der Kupplungspedalstellung. Dabei kann der Fahrer den Anfahrvorgang jederzeit abbrechen, indem er das Kupplungspedal erneut durchdrückt. Wenn andererseits während des Anfahrvorgangs das ACC-System 18 feststellt, daß die Bedingungen für eine automatische Anfahrregelung nicht mehr erfüllt sind, etwa weil das Radarsystem ein Hindernis unmittelbar vor dem eigenen Fahrzeug geortet hat, so kann durch das ACC-System die Fahrzeugbremse aktiviert werden, und gleichzeitig erfolgt ein in dem Diagramm in Fig. 2 nicht dargestellter Übergang von Zustand 62 in den Zustand 56. Umgekehrt ist auch der Fall denkbar, daß während eines vom Fahrer gesteuerten Anfahrvorgangs (Pfeil 50) festgestellt wird, daß die Bedingungen für eine automatische Anfahrregelung erfüllt sind, und das System dann automatisch in den Zustand 62 übergeht.

Wenn die Anfahrregelung abgeschlossen ist, erfolgt gemäß Pfeil 64 ein Übergang von dem Zustand 62 in den Zustand 52.

Die oben beschriebenen Zyklen können im Laufe der Fahrt mehrfach durchlaufen werden, beispielsweise im Stop-and-Go-Betrieb während eines Verkehrsstaus. Wenn im Zustand 56 das Fahrzeug anhält und der Fahrer die Zündung ausschaltet und der Motor zum Stillstand gekommen ist (Pfeil 66), so wird im Zustand 68 durch einen vom Treiber 16 ausgegebenen Befehl die Arretiereinrichtung 34 des Stellantriebs 14 deaktiviert und die Stellstange 32 ausgefahren, so daß das Kupplungspedal 12 aufgrund der Wirkung der Schenkelfeder 26 in die Ruhestellung zurückkehrt. Auf diese Weise wird über Pfeil 70 wieder der Ausgangszustand 44 erreicht.

Wahlweise kann das System auch so ausgelegt sein, daß, wenn der Fahrer im Zustand 56 das Getriebe in die Neutralstellung bringt, die Arretierung der Kupplung automatisch aufgehoben wird. Wenn der Fahrer dann wieder den ersten Gang einlegt und dazu das Kupplungspedal betätigt, erfolgt ein Übergang in den Zustand 48.

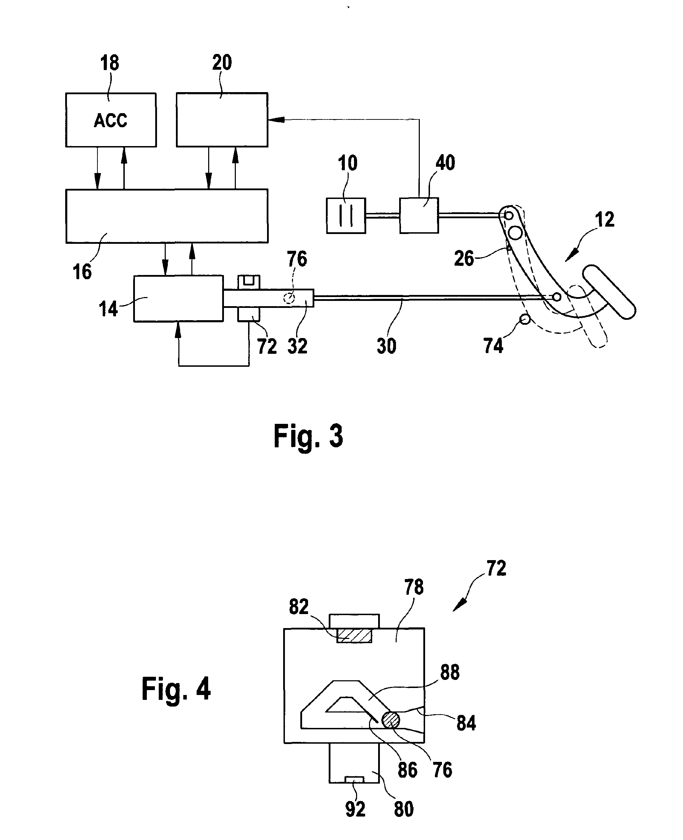

Fig. 3 illustriert ein Ausführungsbeispiel, das sich von dem Ausführungsbeispiel nach Fig. 1 vor allem darin unterscheidet, daß anstelle der in den Stellantrieb 14 integrierten Arretiereinrichtung eine mechanische Arretiereinrichtung 72 an der Stellstange 32 vorgesehen ist. Der Stellantrieb 14 braucht deshalb in diesem Beispiel nicht selbsthaltend zu sein. Der Weg des Kupplungspedals 12 wird hier nur durch einen festen Anschlag 74 begrenzt, der jedoch noch etwas vom Kupplungspedal entfernt ist, wenn dieses durch die Arretiereinrichtung 72 in der betätigten Stellung gehalten wird. Außerdem reagiert in diesem Beispiel der Treiber 16 nicht auf Signale eines elektronischen Stabilitätssystems, und der Pedalwegsensor 40 meldet den Pedalweg direkt an das Steuersystem 20 für den Motor.

An der Stellstange 72 ist ein Steuerstift 76 angeordnet, der mit der Arretiereinrichtung 72 zusammenwirkt.

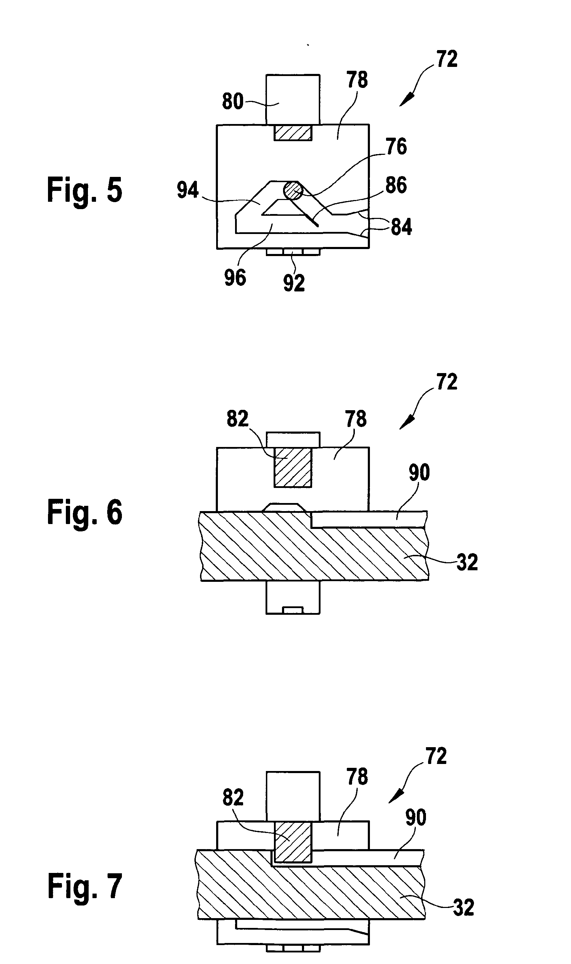

Eine mögliche Realisierung der mechanischen Arretiereinrichtung 72 soll nun anhand der Figuren 4 bis 7 erläutert werden. Die Arretiereinrichtung weist einen Schieber 78 auf, der längs einer Führung 80 quer zur Bewegungsrichtung der Stellstange 32 beweglich ist und einen Verriegelungskörper 82 zur Verriegelung der Stellstange trägt. Figuren 4 und 6 zeigen den Zustand, in dem der Steuerstift 76 (in Fig. 4 im Querschnitt dargestellt) in die Arretiereinrichtung 72 einfährt. Der Steuerstift ist gerade in einen durch eine Nut in dem Schieber 78 gebildete Führungskulisse 84 eingefahren und wird bei weiterer Bewegung nach links in Fig. 4 durch eine Blattfeder 86 in einen schräg verlaufenden Ast 88 der Führungskulisse abgelenkt. Dadurch wird der Schieber 78 nach unten in Fig. 4 verschoben, so daß er zunächst die in Fig. 5 gezeigte Position erreicht. Wie in Figuren 6 und 7 gezeigt ist, bewirkt diese Bewegung des Schiebers 78, daß der Verriegelungskörper 82 in eine Längsnut 90 der Stellstange 32 einfährt und diese in ihrer Position verriegelt. Diese Position der Stellstange und damit des Kupplungspedals 12 entspricht sinngemäß der Druckpunktstellung, die in Fig. 1 gestrichelt eingezeichnet ist. In dieser Stellung ist die Kupplung 10 bereits vollständig geöffnet.

Durch den Schieber 78 wird in dieser Stellung ein Kontakt 92 betätigt, und ein entsprechendes Schaltsignal wird an den Stellantrieb 14 übermittelt (Fig. 3) und bewirkt das Abschalten des Stellantriebs. Das Kupplungspedal wird nun allein durch die Arretiereinrichtung 72 in der betätigten Stellung gehalten. Die Stellstange wird in dieser Stellung durch einen nicht gezeigten Selbsteinzug erfaßt und mit einer Kraft, die schwächer ist als die der Schenkelfeder 26, elastisch nach links in Fig. 3 vorgespannt.

Wenn der Fahrer die Arretierung lösen möchte, drückt er das Kupplungspedal 12 weiter durch, bis es den Anschlag 74 erreicht. Durch den erwähnten Selbsteinzug wird dann die Stellstange nach links gezogen, so daß der Steuerstift 76 in einen entgegengesetzt geneigten Ast 94 der Führungskulisse gelangt und dadurch den Schieber wieder in die in Figuren 4 und 6 gezeigte Position zurückstellt. Folglich tritt der Verriegelungskörper 82 wieder aus der Längsnut 90 aus, und die Verriegelung ist aufgehoben. Wenn nun der Fahrer das Kupplungspedal losläßt, bewegt sich der Steuerstift 76 durch einen geraden Ast 96 der Führungskulisse (Fig. 5) zurück und tritt unter vorübergehender Auslenkung der Blattfeder 86 aus der Führungskulisse 84 aus.

Wenn der Fahrer das Kupplungspedal 12 mit dem Fuß niederdrückt, ohne daß der Stellantrieb 14 aktiviert wird, so wird die Arretiereinrichtung 72 nicht wirksam, und es wird lediglich der Seilzug 30 gelockert.

## Patentansprüche

1. Vorrichtung zur Betätigung einer Kupplung (10) in einem Kraftfahrzeug, mit einem Kupplungspedal (12), das zwischen einer Ruhestellung und einer betätigten Stellung bewegbar ist, in der es die Kupplung geöffnet hält, einem Stellantrieb (14), der auf ein Signal eines Treibers (16) der Vorrichtung die Kupplung (10) öffnet, einem Stenersystem (20) für den Motor des Fahrzeugs, und einer Arretiereinrichtung (34; 72), die die Kupplung (10) in der geöffneten Stellung hält und die durch einen Schließbefehl des Treibers deaktivierbar ist, wobei der Treiber (16) mit dem Steuersystem (20) verbunden und dazu ausgebildet ist, das Signal zum Öffnen der Kupplung an den Stellantrieb (14) auszugeben, wenn ein Getriebegang des Fahrzeugs eingelegt ist und die Motordrehzahl einen bestimmten Schwellenwert unterschreitet, **gekennzeichnet, durch** eine Kombination mit einem adaptiven Geschwindigkeitsregler (18), der dazu in der Lage ist, das Fahrzeug abhängig von der Verkehrssituation automatisch in den Stand zu bremsen und in Kombination mit einem Geschwindigkeitsregler (18) , der einen integrierten Anfahrregler aufweist, der **durch** den vom Treiber (16) übermittelten Schließbefehl aktivierbar ist

2. Vorrichtung nach Anspruch 1, **dadurch gekennzeichnet, daß** der Stellantrieb (14) indirekt über das Kupplungspedal (12) auf die Kupplung (10) wirkt.

3. Vorrichtung nach Anspruch 2, **dadurch gekennzeichnet, daß** der Stellantrieb (14) über einen Seilzug (30) mit dem Kupplungspedal (12) verbunden ist.

4. Vorrichtung nach einem der vorstehenden Ansprüche, **dadurch gekennzeichnet, daß** die Arretiereinrichtung (34) in den Stellantrieb (14) integriert ist.

5. Vorrichtung nach Anspruch 4, **dadurch gekennzeichnet, daß** der Stellantrieb (14) ein selbsthaltender elektromechanischer Stellantrieb ist.

6. Vorrichtung nach einem der Ansprüche 1 bis 3, **dadurch gekennzeichnet, daß** die Arretiereinrichtung (72) eine mechanische Arretiereinrichtung ist.

7. Vorrichtung nach einem der vorstehenden Ansprüche, **dadurch gekennzeichnet, daß** ein Schließbefehl zum Deaktivieren der Arretiereinrichtung (34; 76) durch den Fahrer eingebbar ist, indem er das Kupptungspedal (12) betätigt.

8. Vorrichtung nach Anspruch 7 in Kombination mit Anspruch 2, **dadurch gekennzeichnet, daß** die Arretiereinrichtung (34; 72) dadurch deaktivierbar ist, daß der Fahrer das Kupplungspedal (12) über die Betätigungsstellung hinaus niederdrückt.

9. Vorrichtung nach einem der vorstehenden Ansprüche, in Kombination mit einem elektronischen Stabilitätssystem (22) für das Kraftfahrzeug, **dadurch gekennzeichnet, daß** der Treiber (16) dazu ausgebildet ist, das Signal zum Öffnen der Kupplung an den Stellantrieb (14) auszugeben, wenn das Stabilitätssystem (22) einen kritischen dynamischen Zustand des Fahrzeugs meldet

10. Vorrichtung nach Anspruch 9, **dadurch gekennzeichnet, daß** der Treiber (16) dazu ausgebildet ist, den Schließbefehl auszugeben, wenn das Stabilitätssystem (22) meldet, daß sich der dynamische Zustand des Fahrzeugs stabilisiert hat.

## Claims

1. Device for actuating a clutch (10) in a motor vehicle, having a clutch pedal (12) which can be moved between a rest position and an actuated position in which said clutch pedal (12) holds the clutch open, an actuator drive (14) which opens the clutch (10) in response to a signal of a driver device (16) of the device, a control system (20) for the motor of the vehicle, and a locking device (34, 72) which holds the clutch (10) in the opened position and which can be deactivated by a closing command of the driver device, wherein the driver device (16) is connected to the control system (20) and is designed to output the signal for opening the clutch to the actuator drive (14) if a gear speed of the vehicle is engaged and the engine speed drops below a specific threshold value, **characterized by** a combination with an adaptive cruise controller (18) which is capable of braking the vehicle automatically to a stationary state as a function of the traffic situation, and in combination with a cruise controller (18) which has an integrated starter controller which can be activated by the closing command transmitted by the driver device (16).

2. Device according to Claim 1, **characterized in that** the actuator drive (14) acts indirectly on the clutch (10) via the clutch pedal (12).

3. Device according to Claim 2, **characterized in that** the actuator drive (14) is connected to the clutch pedal (12) via a Bowden cable (30).

4. Device according to one of the preceding claims, **characterized in that** the locking device (34) is integrated into the actuator device (14).

5. Device according to Claim 4, **characterized in that** the actuator drive (14) is a self-locking electromechanical actuator drive.

6. Device according to one of Claims 1 to 3, **characterized in that** the locking device (72) is a mechanical locking device.

7. Device according to one of the preceding claims, **characterized in that** a closing command for deactivating the locking device (34, 72) can be input by the driver by said driver actuating the clutch pedal (12).

8. Device according to Claim 7 in combination with Claim 2, **characterized in that** the locking device (34, 72) can be deactivated by the driver depressing the clutch pedal (12) beyond the actuation position.

9. Device according to one of the preceding claims, in combination with an electronic stability system (22) for the motor vehicle, **characterized in that** the driver device (16) is designed to output the signal for opening the clutch to the actuator drive (14) when the stability system (22) signals a critical dynamic state of the vehicle.

10. Device according to Claim 9, **characterized in that** the driver device (16) is designed to output the closing command when the stability system (22) signals that the dynamic state of the vehicle has stabilized.

## Revendications

1. Dispositif pour l'actionnement d'un embrayage (10) dans un véhicule automobile, comprenant une pédale d'embrayage (12) qui peut être déplacée entre une position de repos et une position actionnée dans laquelle elle maintient l'embrayage ouvert, un mécanisme de commande (14) qui, suite à un signal d'un étage excitateur (16) du dispositif, ouvre l'embrayage (10), un système de commande (20) pour le moteur du véhicule et un dispositif de blocage (34 ; 72) qui maintient l'embrayage (10) dans la position ouverte et qui peut être désactivé par un ordre de fermeture de l'étage excitateur, l'étage excitateur (16) étant connecté au système de commande (20) et conçu pour délivrer le signal pour l'ouverture de l'embrayage au mécanisme de commande (14) lorsqu'un rapport de transmission du véhicule est enclenché et que le régime du moteur devient inférieur à une valeur seuil déterminée, **caractérisé par** une association avec un régulateur de vitesse adaptatif (18) qui est en mesure de freiner automatiquement le véhicule jusqu'à l'arrêt en fonction des conditions de circulation et en association avec un régulateur de vitesse (18) qui comprend un régulateur de démarrage intégré qui peut être activé par l'ordre de fermeture transmis par l'étage excitateur (16).

2. Dispositif selon la revendication 1, **caractérisé en ce que** le mécanisme de commande (14) agit indirectement sur l'embrayage (10) par l'intermédiaire de la pédale d'embrayage (12).

3. Dispositif selon la revendication 2, **caractérisé en ce que** le mécanisme de commande (14) est relié à la pédale d'embrayage (12) au moyen d'un câble Bowden (30).

4. Dispositif selon l'une quelconque des revendications précédentes, **caractérisé en ce que** le dispositif de blocage (34) est intégré dans le mécanisme de commande (14).

5. Dispositif selon la revendication 4, **caractérisé en ce que** le mécanisme de commande (14) est un mécanisme de commande électromécanique à auto-maintien.

6. Dispositif selon l'une quelconque des revendications 1 à 3, **caractérisé en ce que** le dispositif de blocage (72) est un dispositif de blocage mécanique.

7. Dispositif selon l'une quelconque des revendications précédentes, **caractérisé en ce qu'**un ordre de fermeture pour désactiver le dispositif de blocage (34 ; 72) peut être entré par le conducteur en actionnant la pédale d'embrayage (12).

8. Dispositif selon la revendication 7 en association avec la revendication 2, **caractérisé en ce que** le dispositif de blocage (34 ; 72) peut être désactivé par le fait que le conducteur enfonce la pédale d'embrayage (12) au-delà de la position d'actionnement.

9. Dispositif selon l'une quelconque des revendications précédentes, en association avec un système de stabilité électronique (22) pour le véhicule automobile, **caractérisé en ce que** l'étage excitateur (16) est conçu pour délivrer le signal pour l'ouverture de l'embrayage au mécanisme de commande (14) lorsque le système de stabilité (22) signale un état dynamique critique du véhicule.

10. Dispositif selon la revendication 9, **caractérisé en ce que** l'étage excitateur (16) est conçu pour délivrer l'ordre de fermeture lorsque le système de stabilité (22) signale que l'état dynamique du véhicule s'est stabilisé.
